# EUROPEAN PATENT SPECIFICATION

(11) **EP 0 376 129 B1**
(45) Date of publication and mention of the grant of the patent: **03.11.1993**
(21) Application number: 89123478.3
(22) Date of filing: 19.12.1989
(51) Int. Cl.: H02K 41/06

(54) **Electric motor**
Elektromotor
Moteur électrique

(30) Priority: 28.12.1988 JP 329229/88
(43) Date of publication of application: 04.07.1990
(73) Proprietor: KABUSHIKI KAISHA BIG, Ibaraki-shi Osaka-fu 567 (JP); Kawai, Teruo, Ota-ku Tokyo 146 (JP)
(72) Inventor: Kawai, Teruo, Ota-ku Tokyo 146 (JP)
(74) Representative: Goddar, Heinz J., Dr.

(56) References cited:
- DE-A- 2 002 070
- GB-A- 1 246 444
- ELECTRONICS & POWER, vol. 18, July 1972, pages 269-272, Hitchin Herts, GB; B. BOWERS: "The eccentric electromagnetic engine - a chapter for the very early history of the electric motor"
- IEE PROCEEDINGS B, vol. 128, no. 6, November 1981, pages 313-322, Old Working, Surrey, GB; R.A. ASHEN, H.R. BOLTON: "Aspects of the hipocycloidal reluctance motors"

## Description

The present invention relates to an electric motor in accordance with the features of the preamble of claim 1.

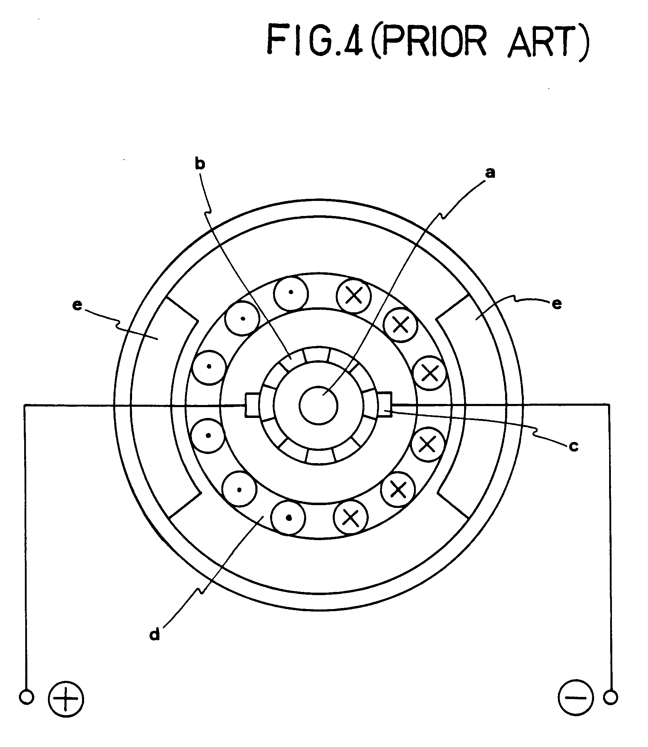

A prior art electric motor for transforming electric power into mechanic power is illustrated in Fig. 4. The electric motor comprises a rotary axle a, a commutator b and brushes c combined with the commutator b positioned around the rotary axle a, an armature d composed of an iron core and a coil wound around the iron core, and a pair of magnets e positioned outside the armature d whereby the armature d is turned by the attraction between the electromagnets to thereby produce the turning force or the mechanical force. The prior art electric motor has however the following problem:
Inasmuch as mutual induction direction between the armature and the magnets fixed outside the armature is circumferential, the inductance distance in the successive attractive and repellent movement effected in the operation of the electric motor, namely, the distance from the start of the mutual attraction effected between the magnets of the fixed side and those of the turning side to the movement of the pole of the attractive force caused by such mutual attraction from an axial core to each radial line thereof cannot be smaller than the distance which is defined by dividing the circumferential length of the fixed side and the turning side confronted to and brought into contact with the fixed side by numbers of switching of poles to be effected when the axial core is turned 360° irrespective of brush or non-contact type.

In an inertia type motor, there is a shortcoming that the inertia type motor is delayed in actuation thereof and much power supply is wasted because the inertia type motor cannot operate with its inherent capacity when the inertia type motor is energized to arrive at a fixed speed of rotation.

An electric stepping motor in accordance with the features of the pre-characterizing part of claim 1 of the present invention is disclosed in GB-A-1246444. There energizing means are mentioned, which are provided to supply d.c. pulses in sequence successively to energize electromagnets around a stator without giving a concrete teaching about how the energizing means control the movement of the rotor, namely how they know, when the next suitable d.c. pulse has to be emitted.

DE-A-2002070 discloses an electric motor and a possible realization of a switching of the current for the appropriate magnet in the electric motor, whereby the iron cylinder has to consist of several iron cores and the magnets are movable by having springs connected thereto, leading to a quite complicated structure.

Also "Electronics and Power", vol. 18, July 1972, p. 269-272, deals with an electric motor and points out that one electromagnet has to act at any one time, but from this document it cannot be gathered how to trigger the current supply for the different electromagnets.

It is an object of the present invention to provide an electric motor overcoming the drawbacks of the prior art electric motors just described.

It is therefore an object of the present invention to provide an electric motor capable of producing and taking off high effective turning energy or mechanical force by a predetermined input of electric force and eliminating the delayed actuation thereof and the damages caused thereby by efficiently, sequentially energizing the electromagnets comprised in said electric motor.

In accordance to the present invention the above mentioned objects are achieved by fulfilling the features of the characterizing part of claim 1 of the present invention.

Preferred embodiments of the present invention are described by the dependent claims 2 to 5.

The above and other objects, features and advantages of the present invention will become more apparent from the following description taken in conjunction with the accompanying drawings.
Fig. 1 is a partly cut-away front elevation showing an electric motor according to the present invention;
Fig. 2 is a cross sectional view taken along II-II of Fig. 1;
Fig. 3 is a view of assistance in explaining the operation of an electric switching circuit employed in the electric motor of the present invention; and
Fig. 4 is a prior art electric motor.

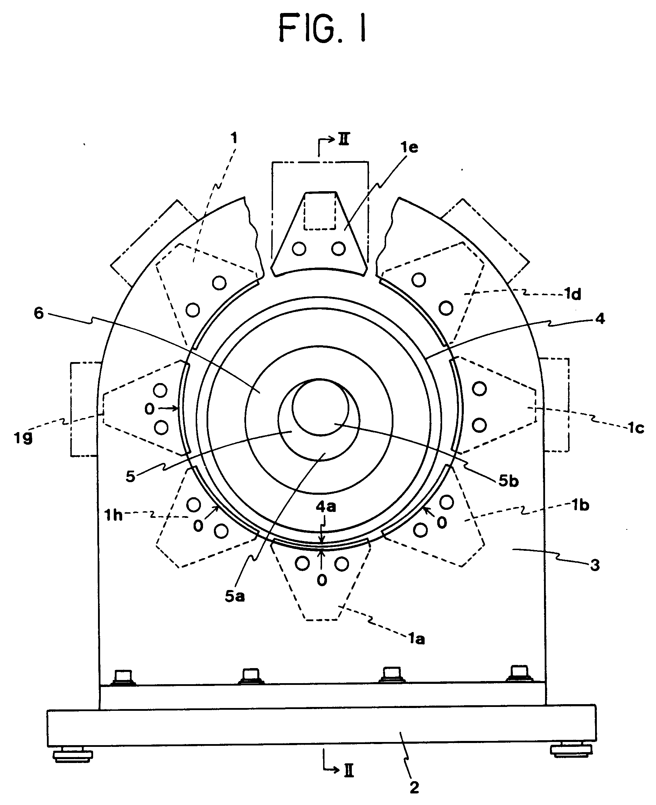

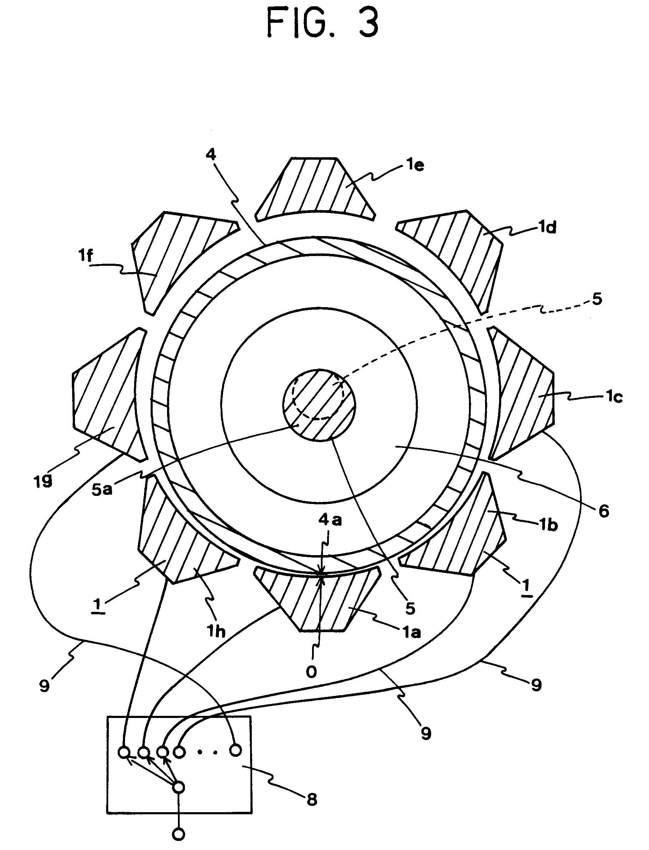

An electric motor according to an embodiment of the present invention will be described with reference to Figs. 1 to 3.

The electric motor comprises a plurality of electromagnets 1a, 1b .... arranged annularly in parallel, an electric current switching circuit 8 connected to each electromagnet, an iron cylinder 4 arranged inside the electromagnets 1a, 1b .... and having a peripheral surface to be attracted partially arbitrarily by part of the electromagnets 1a, 1b ...., a main axle 5a positioned coaxially at the center of the iron cylinder 4, namely, coaxially arranged with an axial core of the iron cylinder 4 via bearings 6, 7, and eccentric axles 5b provided at both ends of the main axle 5a so that the eccentric axles 5b are arranged in accordance with the center of the electromagnets 1a, 1b, .... to define a power generating axle.

More in detail, the electromagnets 1a, 1b .... are annularly arranged in the same circumference and provided between supporting frames 3, 3 respectively oppositely projected from a base 2. The number of the electromagnets are eight according to the embodiment but not limited thereto. Generally, the turning movement of the electromagnets becomes smoother with an increasing number of electromagnets. The iron cylinder 4 has an outer diameter slightly smaller than an inner diameter of each electromagnet arranged annularly. The axle 5 comprises the main axle 5a positioned in the center of the iron cylinder 4 and the eccentric axles 5b having diameters less than that of the main axle 5a and being provided at both ends of the main axle 5a. The iron cylinder 4 and the main axle 5a are positioned coaxially, hence the main axle 5a operates as a crank pin and the eccentric axles 5b operate as crank shafts.

The electric motor having such an arrangement will be operated as follows.

The electric current switching circuit 8 applies the current to the electromagnets 1a, 1b, 1c .... in such a way that the electromagnets 1a, 1b, 1c .... are successively energized, whereby the iron cylinder portion 4a is attracted successively by the electromagnets 1a, 1b .... so that the iron cylinder 4 performs the turning movement or the rotary motion. Accordingly, the eccentric axles 5b form rotary axles whereby the mechanical force or power caused by the rotary motion is taken off from the eccentric axles 5b as a drive source. The attractive force is intensely generated at the portion of the iron cylinder closest to a portion 4a where the electromagnets 1a, 1b .... and the iron cylinder 4 are brought into contact with each other. Immediately after the portion 4a of the iron cylinder 4 arrives at the center 0 point of the electromagnet 1a, the electromagnet 1b is energized while the electromagnet 1a is de-energized at the same time. Immediately after the portion 4a of the iron cylinder 4 is attracted by the electromagnet 1b and arrives at the center 0 point of the electromagnet 1b, the electromagnet 1c is energized while the electromagnet 1b is de-energized at the same time. The electromagnet 1d, 1e .... are successively operated, energized and de-energized, in the same manner.

When the electric current switching circuit 8 applies the current to the three electromagnets, 1a, 1b 1c at a time to thereby energize the three electromagnets 1a, 1b, 1c simultaneously, immediately after the portion 4a of the iron cylinder 4 arrives at the center 0 point of the electromagnet 1a, the electromagnet 1d following the last energized electromagnet 1c is energized while the electromagnet 1a is de-energized at the same time. Immediately after the portion 4a of the iron cylinder 4 is attracted by the electromagnet 1b and arrives at the center 0 point of the electromagnet 1b, the electromagnet 1e is energized while the electromagnet 1b is de-energized at the same time. When such operations are successively repeated for the electromagnet 1f, 1g ...., the iron cylinder 4 effects the rotary motion.

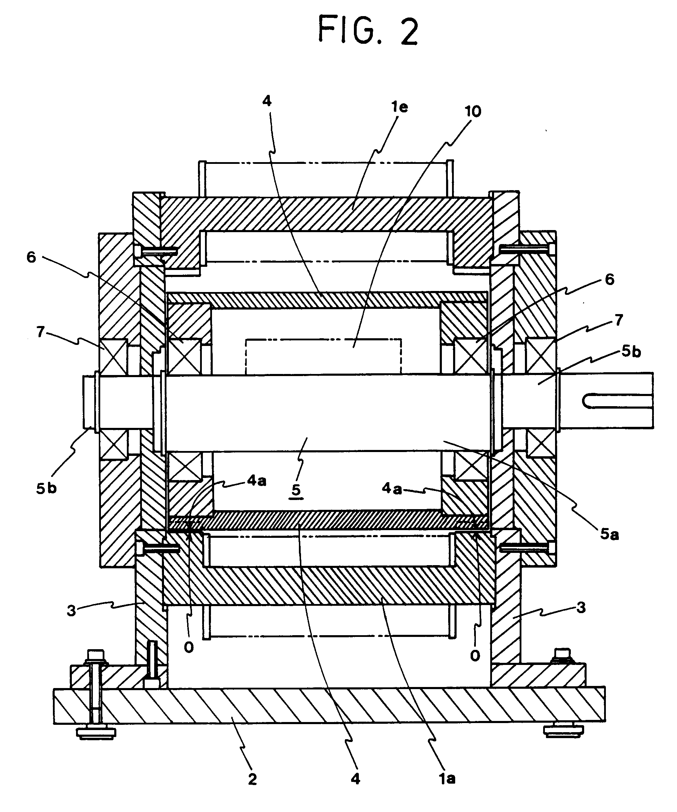

With such repeated rotary motions, the turning force or the mechanical force is taken off from the eccentric axles 5b of the axle 5 provided at the center of the iron cylinder 4. However, inasmuch as the eccentric axles 5b are eccentric relative to the main shaft 5a, the main shaft 5a produces a centrifugal force when it is turned. Accordingly, once the main shaft 5a starts to turn, the speed of rotation is increased satisfactorily. However, inasmuch as there is a case that the main shaft 5a does not turn smoothly until the main shaft 5a starts to turn from a static state, a weight 10, which can be adjusted in its weight, may be attached to the main shaft 5a so that the main axle 5a can smoothly turn as shown in an imaginary line in Fig. 2.

As mentioned above in detail, the portion 4a of the iron cylinder arranged inside the electromagnets 1a, 1b, .... is successively attracted by the electromagnets 1a, 1b .... arranged annularly around a central axis when the electromagnets are successively energized, at least one at a time, to thereby subject the iron cylinder 4 to the rotary motion. With successive rotary motion, a mechanical force or power is generated and taken off from the eccentric axles 5b provided at both sides of the main axle 5a. Thus, the rotary motion can be utilized as a drive source. Accordingly, inasmuch as the iron cylinder can be turned by the attractive force within the electromagnets arranged annularly, it is possible to take off a great power from the power axle, namely, from the eccentric axles within a short period of time with a slight electric force or power. Furthermore, as the electric motor of the present invention is simple in structure and requires a small number of parts, the electric motor of the present invention can be manufactured easily as well as at low cost and the use of the same is accompanied with a low amount of trouble.

Although the invention has been described in its preferred form with a certain degree of particularity, it is to be understood that many variations and changes are possible in the invention without departing from the scope thereof.

The features disclosed in the foregoing description, in the claims and/or in the accompanying drawings may, both, separately and in any combination thereof, be material for realising the invention in diverse forms thereof.

## Claims

1. An electric motor comprising a plurality of electromagnets arranged annularly around a central axis and in mutually parallel relationship; an electric switching circuit means connected to each electromagnet; an iron cylinder arranged inside the electromagnets and having a peripheral surface; a main axle; and eccentric axles characterized in that the main axle (5a) is positioned at the center of the iron cylinder (4) coaxially relative thereto and eccentrically relative to said central axis, said main axle (5a) being supported by bearings (6, 7) in said iron cylinder (4) for rotation relative to the same; the eccentric axles (5b, 5b) being arranged coaxially with the central axis of said electromagnets (1a, 1b...) and supported for concentric rotation thereabout to define a power generating axle are rigidly provided at both ends of the main axle (5a) and eccentrically relative thereto; and the electric switching circuit (8) applies electric current successively to each electromagnet (1a, 1b...) to sequentially energize an electromagnet (1b) when the preceding electromagnet (1a) is deenergized immediately after a portion (4a) of the iron cylinder (4) arrives at a center point (0) of the preceding electromagnet (1a), where the iron cylinder (4) is in contact with the electromagnet (1a) and a corresponding attractive force caused by the energized electromagnet (1a) is intensely generated acting on a portion of the peripheral surface, around said point (0), of the iron cylinder (4).

2. An electric motor according to claim 1, wherein the number of electromagnets (1a, 1b...) is at least eight.

3. An electric motor according to claim 1, wherein the iron cylinder (4) has an outer diameter slighthy smaller than an inner diameter f defined by inner surfaces of said electromagnets (1a, 1b...).

4. An electric motor according to claim 1, wherein each eccentric axle (5b, 5b) has a diameter which is less than that of the main axle (5a).

5. An electric motor according to claim 1, wherein the electric current switching circuit means (8) includes means for applying the current successively to respective groups of said electromagnets (1a, 1b...) such that the electromagnets (1a, 1b...) of respective groups are energized at the same time.

## Patentansprüche

1. Elektromotor umfassend eine Vielzahl von ringförmig um eine mittige Achse, konzentrisch angeordneten Elektromagneten; ein mit jedem Elektromagneten verbundenes elektrisches Schaltkreismittel; ein innerhalb der Elektromagneten angeordneter Eisenzylinder mit einer Umfangsfläche; eine Hauptwelle; und exzentrische Wellen, dadurch gekennzeichnet, daß die Hauptwelle (5a) in dem Mittelpunkt des Eisenzylinders (4) koaxial zu demselben und exzentrisch bezüglich besagter mittiger Achse angeordnet ist, wobei besagte Hauptwelle (5a) durch Lager (6, 7) in besagtem Eisenzylinder (4) zur Rotation bezüglich derselben gelagert ist; daß die exzentrischen Wellen (5b, 5b), die koaxial mit der mittigen Achse besagter Elektromagneten (1a, 1b...) und zur konzentrischen Drehung um dieselbe zum Festlegen einer Leistungserzeugungswelle angeordnet sind, fest an beiden Enden der Hauptwelle (5a) angebracht und exzentrisch zu derselben angeordnet sind; und daß der elektrische Schaltkreis (8) elektrischen Strom der Reihe nach an jeden Elektromagneten (1a, 1b...) anlegt, um einen Elektromagneten (1b) gemäß der Reihenfolge mit Strom zu beliefern, wenn der vorangehende Elektromagnet (1a) entmagnetisiert wird, direkt nachdem ein Bereich (4a) des Eisenzylinders (4) an einem Mittelpunkt (0) des vorangehenden Elektromagneten (1a) ankommt, wobei an dem Bereich (4a) der Eisenzylinder (4) in Kontakt mit dem Elektromagneten (1a) steht und eine entsprechende durch den mit Strom versorgten Elektromagneten (1a) hervorgerufene Anziehungskraft intensiv erzeugt wird, und die Anziehungskraft auf einen Bereich der Umfangsfläche, um besagten Punkt (0), des Eisenzylinders (4) wirkt.

2. Elektromotor nach Anspruch 1, dadurch gekennzeichnet, daß die Anzahl von Elektromagneten (1a, 1b...) zumindest acht beträgt.

3. Elektromotor nach Anspruch 1, dadurch gekennzeichnet, daß der Eisenzylinder (4) einen Außendurchmesser aufweist, der ein wenig kleiner als ein Innendurchmesser f ist, der durch die Innenflächen besagter Elektromagnete (1a, 1b...) festgelegt ist.

4. Elektromotor nach Anspruch 1, dadurch gekennzeichnet, daß jede exzentrische Welle (5b, 5b) einen Durchmesser aufweist, der kleiner als der der Hauptwelle (5a) ist.

5. Elektromotor nach Anspruch 1, dadurch gekennzeichnet, daß das elektrische Stromschaltkreismittel (8) Mittel zum nacheinander Anlegen des Stroms an jeweilige Gruppen besagter Elektromagneten (1a, 1b...) umfaßt, so daß die Elektromagneten (1a, 1b...) der jeweiligen Gruppen gleichzeitig mit Strom versorgt sind.

## Revendications

1. Moteur électrique comprenant une pluralité d'électro-aimants disposés de manière annulaire autour d'un axe central et en relation mutuellement parallèle, un moyen de circuit de commutation électrique connecté à chaque électro-aimant; un cylindre en fer placé à l'intérieur des électro-aimants et présentant une surface périphérique, un axe principal et des axes excentriques, caractérisé en ce que l'axe principal (5a) est disposé au centre du cylindre en fer (4), de manière coaxiale par rapport à ce dernier et excentrique par rapport audit axe central, ledit axe principal (5a) étant porté par des paliers (6, 7) situés dans ledit cylindre en fer (4), pour tourner par rapport à ce dernier, les axes excentriques (5b, 5b), agencés de façon coaxiale par rapport à l'axe central desdits électro-aimants (1a, 1b ...) et portés pour effectuer une rotation concentrique autour de lui, pour définir un axe de production de puissance, sont placés rigidement aux deux extrémités de l'axe principal (5a) et se déplacent de façon excentrique par rapport à ce dernier et le circuit de commutation électrique (8) applique un courant électrique successivement à chaque électro-aimant (1a, 1b ...), pour activer séquentiellement un électro-aimant (1b) lorsque l'électro-aimant (1a) précédent est désactivé, immédiatement après qu'une partie (4a) du cylindre en fer (4) arrive en un point central (0) de l'électro-aimant (1a) précédent, dans lequel le cylindre en fer (4) est en contact avec l'électro-aimant (1a) et une force d'attraction correspondante, provoquée par l'électro-aimant (1a) activé, est produite de façon intense et agit sur une partie de la surface périphérique, autour dudit point (0), du cylindre en fer (4).

2. Moteur électrique selon la revendication 1, dans lequel le nombre d'électro-aimants (1a, 1b ...) est au moins égal à huit.

3. Moteur électrique selon la revendication 1, dans lequel le cylindre en fer (4) présente un diamètre extérieur légèrement inférieur à un diamètre intérieur f, défini par des surfaces intérieures desdits électro-aimants (1a, 1b ...).

4. Moteur électrique selon la revendication 1, dans lequel chaque axe excentrique (5b, 5b) présente un diamètre inférieur à celui de l'axe principal (5a).

5. Moteur électrique selon la revendication 1, dans lequel le moyen de circuit de commutation de courant électrique (8) comprend un moyen pour appliquer successivement le courant à des groupes respectifs desdits électro-aimants (1a, 1b ...), de manière que les électro-aimants (1a, 1b ...) des groupes respectifs soient activés en même temps.
